# EUROPEAN PATENT APPLICATION

(11) **EP 4 524 120 A1**
(43) Date of publication of application: **19.03.2025**
(21) Application number: 23196922.1
(22) Date of filing: 12.09.2023
(51) Int. Cl.: C04B 28/06, C04B 28/12, C04B 40/00, C04B 103/12, C04B 103/14

(54) **ACCELERATING ADMIXTURE FOR CEMENTITIOUS COMPOSITIONS AND CEMENTITIOUS COMPOSITIONS COMPRISING THE SAME**

(71) Applicant: Sika Technology AG, 6340 Baar (CH)
(72) Inventor: EVANS, Craig Edward, Farnworth Bolton, BL4 7JN (GB); JONES, Panassakorn, Sandy, SG19 1RR (GB); LISKA, Martin, Cambridge, CB23 8ST (GB)
(74) Representative: Sika Patent Attorneys

(57) **Abstract**

The present invention relates to accelerators for cementitious compositions, in particular cementitious composition having a binder which is a source of aluminates and/or sulfoaluminates, said accelerator comprising an alkali metal carbonate, a metal sulfate, an alkali metal hydroxide, and optionally a source of alkali metal bicarbonates, alkaline earth metal hydroxides or alkaline earth metal oxides. The present invention also relates to cementitious compositions having a binder which is a source of aluminates and/or sulfoaluminates and the inventive accelerator.

## Description

### Technical Field

The present invention relates to accelerating admixtures for cementitious compositions, and cementitious compositions, especially cementitious compositions having a cementitious binder which is a source of aluminates and/or sulfoaluminates, comprising the same.

### Background of the invention

It is known in the field of special mortars, for example cementitious tile adhesives, to use aluminate cements as a cementitious binder. Aluminate cements are recognized for their fast development of strength. Aluminate cements can be used alone or in a mixture with Portland cement.

However, the use of aluminate cements as binder in cementitious compositions typically requires the addition of set accelerators. The most typical set accelerator today being lithium carbonate. The influence of lithium carbonate on aluminate cement setting and hardening has, for example, been studied in the article "The influence of lithium carbonate on phase composition of calcium aluminate cement paste" by M. Niziurska et al published in Procedia Engineering, 108 (2015), 363-370.

Likewise, lithium carbonate is used to accelerate the setting and hardening of sulfoaluminate cement. Calcium sulfoaluminate cement is a known replacement material for Portland cement to reduce the environmental footprint of cementitious compositions.

However, the use of lithium carbonate in formulated cementitious compositions based on aluminate cements or sulfoaluminate cements creates new problems. Especially, the availability of lithium carbonate for the construction industry is becoming significantly lower, in particular because lithium salts are required for battery production and electromobility.

It is therefore desirable to provide alternatives to lithium carbonate to accelerate the setting and hardening of cementitious compositions based on aluminate or sulfoaluminate cements.

### Summary of the invention

It is an objective of the present invention to provide cementitious compositions having a cementitious binder which is a source of aluminates and/or sulfoaluminates which compositions have accelerated setting and/or hardening. It is another objective of the present invention to provide admixtures to accelerate the setting and/or hardening of a cementitious composition, especially of a cementitious compositions having a cementitious binder which is a source of aluminates and/or sulfoaluminates.

It has surprisingly been found that a combination of an alkali metal carbonate, a metal sulfate, an alkali metal hydroxide, and optionally a source of alkali metal bicarbonates, alkaline earth metal hydroxides, or alkaline earth metal oxides is an effective accelerator for cementitious compositions, in particular for cementitious compositions having a cementitious binder which is a source of aluminates and/or sulfoaluminates.

The objective of the present invention is therefore solved by the subject matter of claim 1. Further aspects of the present invention are the subject of independent claims. Preferred embodiments are the subject of dependent claims.

### Detailed ways

In a first aspect the present invention relates to a cementitious composition comprising
a) at least one cementitious binder which is a source of aluminates and/or sulfoaluminates,
b) an accelerator comprising
   (1) an alkali metal carbonate, preferably sodium carbonate,
   (2) a metal sulfate, preferably sodium sulfate, potassium sulfate or aluminum sulfate,
   (3) an alkali metal hydroxide, and
   (4) optionally a source of alkali metal bicarbonates, alkaline earth metal hydroxides, or alkaline earth metal oxides, preferably of calcium hydroxide or calcium oxide.

A cementitious composition within the present context is a composition comprising at least one cementitious binder which is a source of aluminates and/or sulfoaluminates, an accelerator, and optionally one or more of aggregates, fillers, admixtures that are chemically different form the accelerator, and water.

A cementitious binder reacts in the presence of water to form insoluble hydrates. This reaction is called hydration reaction. Strength is developed thereby.

Aluminates within the present context are mineral phases comprising oxides of aluminum. In particular, aluminates are CA₆, CA₂, CA, C₃A, C₁₂A₇ (with C: CaO; A: Al₂O₃). Sulfoaluminates within the present context are mineral phases comprising oxides of aluminum and sulfur and optionally silicon or iron. In particular, sulfoaluminates are C₄(A₃-ₓFₓ)$ (with C: CaO; A: Al₂O₃; F: Fe₂O₃; $: SO₃) where x is an integer of from 0 - 3.

According to embodiments, a cementitious binder which is a source of aluminates and/or sulfoaluminates is a high-alumina cement with an aluminum content, measured as Al₂O₃, of at least 30 wt.-%, especially at least 35 wt.-%, in particular 35 - 58 wt.-%. Preferably, the cementitious binder which is a source of aluminates is calcium aluminate cement (CAC) or alumina cement according to standard EN 14647:2006-01. Other terms often used for types of high-alumina cements are ciment fondu, Tonerdeschmelzzement, or alumina fused cement.

According to embodiments, a cementitious binder which is a source of aluminates and/or sulfoaluminates is a calcium sulfoaluminate cement (CSA) comprising a clinker comprising C₄(A₃-ₓFₓ)$ (C: CaO; A: Al₂O₃; F: Fe₂O₃; $: SO₃) where x is an integer of from 0 - 3. CSA of the present invention typically comprise further phases selected from aluminates (CA, C₃A, C₁₂A₇ with C: CaO; A: Al₂O₃), belite (C₂S with C: CaO, S: SiO₂), ferrites (C₂F, C₂AF, C₄AF, with C: CaO; A: Al₂O₃; F: Fe₂O₃), ternesite (C₅S₂$ with C: CaO, S: SiO₂; $: SO₃) and anhydrite. According to certain embodiments CSA of the present invention contains 15-75 w% C₄A₃$, 0-10 w% aluminates, 0-70 w% belite, 0-35 w% ferrites, 0-20 w% ternesite, and 0-20 w% anhydrite, each based on the total dry weight of the CSA cement.

Preferably, the at least one cementitious binder is selected from calcium aluminate cements and/or calcium sulfoaluminate cements.

The cementitious binder of the present invention can also comprise a mixture of an alumina cement, in particular calcium aluminate cement, and calcium sulfoaluminate cement.

The cementitious binder of the present invention may comprise further cementitious binders in addition to the at least one cementitious binder which is a source of aluminates and/or sulfoaluminates. Further cementitious binders may be selected from Portland cement, especially CEM I, CEM II, CEM III, CEM IV, or CEM V according to standard EN 197-1:2011, pozzolanes, and latent hydraulic binders. Pozzolanes and latent hydraulic binders for example are slag, especially blast furnace slag or basic oxygen slag, clay, calcined clay, especially metakaolin, kiln dust, microsilica, fly ash, pyrogenic silica, precipitated silica, silica fume, zeolite, rice husk ash, burnt oil shale, and natural pozzolane such as pumice and trass.

The cementitious binder of the present invention may additionally comprise calcium sulfate. The calcium sulfate may be present in the form of calcium sulfate-hemihydrate, calcium sulfate-dihydrate and/or anhydrite.

According to embodiments, the at least one cementitious binder of the present invention is a mixture of Portland cement and one of calcium aluminate cement or calcium sulfoaluminate cement.

The weight ratio of Portland cement to calcium aluminate cement or calcium sulfoaluminate cement in a cementitious composition of the present invention may vary in a wide ratio. It can be preferred that a weight ratio of Portland cement to one of calcium aluminate cement or calcium sulfoaluminate cement is between 10:1 and 1:1, preferably 3:1 to 1:1.

In cases where a ratio is based on the total weight of the at least one cementitious binder, this basis is meant to be the sum of all cementitious binder present.

An accelerator within the present context is a material or mixture of materials than can accelerate the setting and/or hardening of a cementitious composition. An acceleration of setting can be measured as a decrease in setting time versus a reference. An acceleration of hardening can be measured as an increase in strength, in particular compressive strength and/or flexural strength, after a given time of hardening versus a reference. The terms hardening and curing can be used interchangeably within the present context. Setting time can be measured as described in standard EN 196-3:2016. Compressive strength and flexural strength can be measured according to standard EN 1015-11:2019 or EN 12390-3:2019-10.

The accelerator of the present invention comprises an alkali metal carbonate, a metal sulfate, an alkali metal hydroxide, and optionally a source of alkali metal bicarbonates, alkaline earth metal hydroxides, or alkaline earth metal oxides. According to preferred embodiments, the accelerator of the present invention consists of an alkali metal carbonate, a metal sulfate, an alkali metal hydroxide, and optionally a source of alkali metal bicarbonates, alkaline earth metal hydroxides, or alkaline earth metal oxides.

Alkali metal carbonates in particular are lithium carbonate, sodium carbonate, and potassium carbonate. Preferably, the alkali metal carbonate is sodium carbonate. It is generally preferred that the cementitious composition of the present invention is free of lithium carbonate.

The metal sulfate very preferably is chosen from sodium sulfate, potassium sulfate, or aluminum sulfate. Aluminum sulfate is especially preferable. The term "aluminum sulfate" includes hydrates of aluminum sulfate, for example Al₂(SO₄)₃ • 14 H₂O.

The alkali metal hydroxide preferably is selected from sodium hydroxide or potassium hydroxide.

It is preferred that the source of alkaline earth metal hydroxides is selected from hydrated lime and that the source of alkaline earth metal oxides is selected from natural hydraulic lime, formulated lime, hydraulic lime, and air lime. Natural hydraulic lime, formulated lime, hydraulic lime, and air lime as used in the context of the present invention refer to materials as described in the standard EN 459-1:2015.

A preferred alkali metal bicarbonate is sodium bicarbonate.

According to preferred embodiments the cementitious composition of the present invention comprises (in each case relative to the total dry mass of the at least one cementitious binder)
(i) 0.01 - 2.0 w%, preferably 0.1 - 1.5 w% of alkali metal carbonate, preferably sodium carbonate,
(ii) 0.01 - 1 w%, preferably 0.1 - 0.5 w% of metal sulfate, preferably sodium sulfate, potassium sulfate or aluminum sulfate,
(iii) 0.01 - 1 w%, preferably 0.05 - 0.25 w% of an alkali metal hydroxide, and
(iv) optionally 0.5 - 5 w% of a source of alkali metal bicarbonates, alkaline earth metal hydroxides, or alkaline earth metal oxides, preferably of calcium hydroxide or calcium oxide.

It is possible that a cementitious composition of the present invention additionally comprises one or more of aggregates, fillers, admixtures that are chemically different form the accelerator, and water. In particular, a cementitious composition of the present invention is a construction material such as mortar, in particular dry mortar, grout, or concrete.

Aggregates can be any material that is non-reactive in the hydration reaction of cementitious binders. Aggregates can be any aggregate typically used for construction materials. Typical aggregates are for example rock, crushed stone, gravel, sand, especially quartz sand, river sand and/or manufactured sand. However, aggregates can also be selected from bio-sourced materials such as flex, hemp, straw, rapeseed, or sunflower. Aggregates may also be crushed recycled construction materials, especially concrete.

The term "fillers" refers to calcareous or siliceous materials of fine particle size. A very typical filles is ground limestone. The particle size of fillers is lower than the particle size of aggregates. For example, fillers may have a particle size of below 0.063 mm. Especially, 90% of the fillers have a particle size of lower than 0.063 mm.

Further admixtures are admixtures which are chemically different from the accelerator of the present invention. According to embodiments, further admixtures are selected from the group consisting of plasticizers, superplasticizers, shrinkage reducers, air entrainers, de-aerating agents, stabilizers, viscosity modifiers, thickeners, water reducers, retarders, water resisting agents, fibers, blowing agents, defoamers, redispersible polymer powders, dedusting agents, chromate reducers, pigments, biocides, corrosion inhibitors, and steel passivating agents. Further accelerators, in particular organic accelerating additives, nitrates, nitrites, thiocyanates, and/or silicates may also be present even though this is not preferred.

In another aspect, the present invention relates to a hardened object, preferably a part of a building, obtainable by mixing a cementitious composition as described above with water and subsequently hardening the mixture.

According to embodiments, the cementitious composition is mixed with water in a weight ratio of water to cement between 0.1 - 0.8, preferably 0.2 - 0.6. Methods for mixing are known to the skilled person per se. It is preferred that hardening of the mixture of water and cementitious composition is done at a temperature between 5 - 50 °C and at a pressure of about 1 atmosphere. It is, however, also possible to harden the mixture at higher temperatures and/or higher pressures, for example by steam curing or curing in an autoclave. Typically, the hardened object is formed by shaping the mixture of water and cementitious composition while still wet and flowable. Shaping is for example possible by spraying, troweling, rolling, or brushing on a solid support, by pouring into a mold, formwork, or crevice, or by free form application.

In particular, the cementitious composition of the present invention may be used as a cementitious tile adhesive, a grouting material, a self-levelling underlayment, a self-levelling overlayment, a render, a repair mortar, a masonry thin join mortar or concrete, a screed, a wall leveller for interior or exterior use, a non-shrink grout, a thin joint mortar, a waterproofing mortar, or an anchoring mortar. A cementitious tile adhesive is especially according to standard EN 12004-1. A grouting material is especially according to standard EN 13888. A self-levelling underlayment or a self-levelling overlayment is especially according to standard EN 13813. A render is especially according to standard EN 998-1. A repair mortar is especially according to standard EN 1504-3. A masonry mortar or concrete is especially according to standards EN 998-2 and EN 206-1. A screed is especially according to standard EN 13813. A non-shrink grout is especially according to standard EN 1504-6. A thin joint mortar is especially according to standard EN 998-2. A waterproofing mortar is especially according to standard EN 1504-2. An anchoring mortar is especially according to standard EN 1504-6.

A cementitious composition of the present invention may also be concrete.

In another aspect, the present invention relates to the use of an admixture comprising
(1) an alkali metal carbonate, preferably sodium carbonate
(2) a metal sulfate, preferably sodium sulfate, potassium sulfate or aluminum sulfate,
(3) an alkali metal hydroxide, and
(4) optionally a source of alkali metal bicarbonates, alkaline earth metal hydroxides, or alkaline earth metal oxides, preferably of calcium hydroxide or calcium oxide, to accelerate the setting and/or hardening of a cementitious composition.

All embodiments described above also apply to this aspect.

It is possible that the admixture consists of
(1) an alkali metal carbonate, preferably sodium carbonate
(2) a metal sulfate, preferably sodium sulfate, potassium sulfate or aluminum sulfate,
(3) an alkali metal hydroxide, and
(4) optionally a source of alkali metal bicarbonates, alkaline earth metal hydroxides, or alkaline earth metal oxides, preferably of calcium hydroxide or calcium oxide.

The admixture can be in the form of a one-component composition. A one-component composition contains all constituents in one compartment. A one-component composition has the advantage that dosage is simple and less problems with wrong dosages may occur. It is preferred within the present context that the admixture is a one-component composition comprising an alkali metal carbonate, a metal sulfate, an alkali metal hydroxide, and optionally a source of alkali metal bicarbonates, alkaline earth metal hydroxides, or alkaline earth metal oxides.

The admixture can be in the form of a two-component or a multiple-component composition. A two component or a multiple-component composition contains the individual constituents in two or more spatially separated containers. A two-component or a multiple-component composition may have the advantage of improved shelf life and may also facilitate dosage adjustment of individual constituents.

The admixture or any component thereof may be in the form of a free flowing powder, a granulate pellet, flakes, or a compacted body. The admixture or any component thereof may also be in the form of a slurry or solution in water.

Acceleration of setting can be measured as a decrease in setting time versus a reference. The reference being a cementitious composition not comprising at least one constituent of the accelerator. Setting time can be measured as described in standard EN 196-3:2016.

Acceleration of hardening can be measured as an increase in strength, in particular compressive strength and/or flexural strength, after a given time of hardening versus a reference. The reference being a cementitious composition not comprising at least one constituent of the accelerator. Compressive strength and flexural strength can be measured according to standard EN 1015-11:2019 or EN 12390-3:2019-10.

It is possible to use an admixture of the present invention to accelerate the setting and/or hardening of a composition comprising any cementitious binder as described above. It is, for example, possible to use an admixture of the present invention to accelerate the setting and/or hardening of a composition comprising only Portland cement and no high-alumina cement or sulfoaluminate cement. It is preferred that the admixture of the present invention is used to accelerate the setting and/or hardening of a cementitious composition which comprises at least one cementitious binder which is a source of aluminates and/or sulfoaluminates. Mixtures of Portland cement, at least one cementitious binder which is a source of aluminates and/or sulfoaluminates, and optionally calcium sulfate may be used.

According to embodiments, an admixture of the present invention comprises or consists of (in each case relative to the total weight of the admixture)
(1) 10 - 80 w%, preferably 15 - 50 w%, of an alkali metal carbonate, preferably sodium carbonate,
(2) 1 - 50 w%, preferably 2 - 20 w%, of a metal sulfate, preferably sodium sulfate, potassium sulfate or aluminum sulfate,
(3) 1 - 50 w%, preferably 1 - 10 w%, an alkali metal hydroxide, and
(4) optionally 1 - 80 w% of a source of alkali metal bicarbonates, alkaline earth metal hydroxides, or alkaline earth metal oxides, preferably of calcium hydroxide or calcium oxide

In particular, in an admixture of the present invention, the alkali metal hydroxide is sodium hydroxide, and the source of alkali metal bicarbonates is selected from sodium bicarbonate, the source of alkaline earth metal hydroxides is selected from hydrated lime, the source of alkaline earth metal oxides is selected from natural hydraulic lime, formulated lime, hydraulic lime, and air lime.

In particular, in an admixture of the present invention, a weight ratio of alkali metal carbonate to alkali metal hydroxide is between 20:1 to 10:1.

In particular, in an admixture of the present invention, a weight ratio of metal sulfate to alkali metal hydroxide is between 10:1 to 1:1.

An admixture as described above can be used in a cementitious composition as described above. The admixture of the present invention can be used as an accelerator in a cementitious composition of the present invention.

The following examples will provide the skilled person with further details of the present invention. They are not intended to limit the invention in any way.

### Examples

The following table 1 shows the raw materials used in the examples.

| | |
|---|---|
| CSA | Calcium sulfoaluminate cement Calumex (available from Caltra Nederland B.V.) |
| CEM I | Portland Cement CEM I 52.5R |
| CEM II | Portland Cement CEM II/A-LL 52.5N |
| Na₂CO₃ | Sodium carbonate, anhydrous (Sigma Aldrich, 99.5% purity) |
| NaOH | Sodium hydroxide, anhydrous (Sigma Aldrich, >98% purity) |
| Al₂(SO₄)₃ | Aluminum sulfate hydrate (Sigma Aldrich, >99% purity) |
| Ca(OH)₂ | Hydrated lime Limbux (available from Tarmac Cement & Lime Ltd.) |
| CaSO₄ | Anhydrite (Sigma Aldrich, >99% purity) |
| Sand | Silica Sand (0.075 - 3.5 mm) |
| Additives | thickener (cellulosic, bentonite), water reducer (naphthalenic), retarder (carboxylic acid), pigments (inorganic) |

Cementitious compositions were prepared by mixing all constituents in the amount as indicated in the following tables 2 and 3 on a Hobart mixer until visually homogeneous. Water was then added in an amount to realize a water to powder weight ratio of 0.21 and mixing was continued for 3 minutes.

Set time was measured as described in standard EN 196-3:2016.

Compressive strength (C.S.) and flexural strength (F.S.) was measured according to standard EN 1015-11:2019 after the time indicated in the tables below.

**Table 2: Cementitious compositions (all in [g]) and results**

| | **Example 1** | **Reference 1** | **Reference 2** | **Reference 3** | **Reference 4** |
|---|---|---|---|---|---|
| CSA | 7.5 | 7.5 | 7.5 | 7.5 | 7.5 |
| CEM I | 19.6 | 19.6 | 19.6 | 19.6 | 19.6 |
| Na₂CO₃ | 0.41 | | 0.41 | 0.41 | |
| NaOH | 0.03 | | | 0.03 | 0.03 |
| Al₂(SO₄)₃ | 0.12 | | 0.12 | | 0.12 |
| Ca(OH)₂ | 0.4 | 0.4 | 0.4 | 0.4 | 0.4 |
| CaSO₄ | 2.5 | 2.5 | 2.5 | 2.5 | 2.5 |
| Sand | 68.5 | 69.1 | 68.5 | 68.6 | 68.9 |
| Additives | 0.9 | 0.9 | 0.9 | 0.9 | 0.9 |
| C.S. 1d [MPa] | 17 | d.n.c. | n.m. | 12.8 | 12.4 |
| F.S. 1d [MPa] | 3.8 | d.n.c. | n.m. | 2.8 | 2.8 |
| C.S. 7d [MPa] | 25 | n.m. | 24 | 24 | 18 |
| F.S. 7d [MPa] | 4.5 | n.m. | 4.0 | 3.5 | 3.7 |
| C.S. 28d [MPa] | 38 | n.m. | 35 | 33 | 34 |
| F.S. 28d [MPa] | 5 | n.m. | 3.9 | 3.6 | 4.2 |

| | | | | | |
|---|---|---|---|---|---|
| d.n.c.: does not cure n.m.: not measured | | | | | |

Results in above table 2 show that hardening is accelerated by the combined use of sodium carbonate, sodium hydroxide, and aluminum sulfate (cf strength at all ages of example 1 versus references). In cases where one of the constituents of the accelerator is left away, slower strength development is observed (cf references 1 - 3). The use of a combination of sodium carbonate, sodium hydroxide, and aluminum sulfate therefore leads to particular good acceleration of hardening.

**Table 3: Cementitious compositions (all in [g]) and results**

| | **Example 2** | **Reference 5** | **Reference 6** | **Reference 7** |
|---|---|---|---|---|
| CSA | 16.75 | 16.75 | 16.75 | 16.75 |
| CEM II | 35.2 | 35.2 | 35.2 | 35.2 |
| Na₂CO₃ | 0.45 | 0.45 | 0.45 | |
| NaOH | 0.03 | | 0.03 | 0.03 |
| Al₂(SO₄)₃ | 0.12 | 0.12 | | 0.12 |
| Ca(OH)₂ | 2 | 2 | 2 | 2 |
| CaSO₄ | 2.1 | 2.1 | 2.1 | 2.1 |
| Sand | 41.2 | 41.2 | 41.3 | 41.6 |
| Additives | 2.2 | 2.2 | 2.2 | 2.2 |
| C.S. 1h [MPa] | 2 | 1.7 | 1.5 | 0 |
| C.S. 2h [MPa] | 8 | 2.5 | 2 | 0 |
| C.S. 1d [MPa] | 26 | 24 | 19 | 15 |
| C.S. 7d [MPa] | 42 | 35 | 40 | 37 |
| C.S. 28d [MPa] | 55 | 45 | 39 | 40 |
| Initial set time [min] | 14 | 16 | 14 | 20 |

Results in above table 3 show that hardening is accelerated by the combined use of sodium carbonate, sodium hydroxide, and aluminum sulfate (cf strength at all ages of example 2 versus references). In cases where one of the constituents of the accelerator is left away, slower strength development is observed (cf references 4 - 6). The use of a combination of sodium carbonate, sodium hydroxide, and aluminum sulfate therefore leads to particular good acceleration of hardening. The setting is also particularly increased where the combination of sodium carbonate, sodium hydroxide, and aluminum sulfate is used (cf example 2).

## Claims

1. A cementitious composition comprising
a) at least one cementitious binder which is a source of aluminates and/or sulfoaluminates,
b) an accelerator comprising
(1) an alkali metal carbonate, preferably sodium carbonate,
(2) a metal sulfate, preferably sodium sulfate, potassium sulfate or aluminum sulfate,
(3) an alkali metal hydroxide, and
(4) optionally a source of alkali metal bicarbonates, alkaline earth metal hydroxides, or alkaline earth metal oxides, preferably of calcium hydroxide or calcium oxide.

2. The cementitious composition according to claim 1, **characterized in that** the at least one cementitious binder is selected from calcium aluminate cements and/or calcium sulfoaluminate cements.

3. The cementitious composition according to at least one of the preceding claims, **characterized in that** the at least one cementitious binder is a mixture of Portland cement and one of calcium aluminate cement or calcium sulfoaluminate cement.

4. The cementitious composition according to claim 3, **characterized in that** a weight ratio of Portland cement to one of calcium aluminate cement or calcium sulfoaluminate cement is between 10:1 and 1:1, preferably 3:1 to 1:1.

5. The cementitious composition according to at least one of the preceding claims, **characterized in that** the alkali metal hydroxide is selected from sodium hydroxide or potassium hydroxide.

6. The cementitious composition according to at least one of the preceding claims, **characterized in that** the source of alkaline earth metal hydroxides or alkaline earth metal oxides is selected from hydrated lime, natural hydraulic lime, formulated lime, hydraulic lime, and air lime.

7. The cementitious composition according to at least one of the preceding claims, **characterized in that** it comprises (in each case relative to the total dry mass of the at least one cementitious binder)
(i) 0.01 - 2.0 w%, preferably 0.1 - 1.5 w% of alkali metal carbonate, preferably sodium carbonate,
(ii) 0.01 - 1 w%, preferably 0.1 - 0.5 w% of metal sulfate, preferably sodium sulfate, potassium sulfate or aluminum sulfate,
(iii) 0.01 - 1 w%, preferably 0.05 - 0.25 w% of an alkali metal hydroxide, and
(iv) optionally 0.5 - 5 w% of a source of alkali metal bicarbonates, alkaline earth metal hydroxides or alkaline earth metal oxides, preferably of calcium hydroxide or calcium oxide.

8. The cementitious composition according to at least one of the preceding claims, **characterized in that** it is free of lithium carbonate.

9. A hardened object, preferably a part of a building, obtainable by mixing a cementitious composition according to at least one of claims 1 - 8 with water and subsequently hardening the mixture.

10. The use of an admixture comprising
(1) an alkali metal carbonate, preferably sodium carbonate
(2) a metal sulfate, preferably sodium sulfate, potassium sulfate or aluminum sulfate,
(3) an alkali metal hydroxide, and
(4) optionally a source of alkali metal bicarbonates, alkaline earth metal hydroxides, or alkaline earth metal oxides, preferably of calcium hydroxide or calcium oxide,
to accelerate the setting and/or hardening of a cementitious composition.

11. The use as claimed in claim 10, **characterized in that** the cementitious composition comprises at least one cementitious binder which is a source of aluminates and/or sulfoaluminates.

12. An admixture comprising or consisting of (in each case relative to the total weight of the admixture)
(1) 10 - 80 w%, preferably 15 - 50 w%, of an alkali metal carbonate, preferably sodium carbonate,
(2) 1 - 50 w%, preferably 2 - 20 w%, of a metal sulfate, preferably sodium sulfate, potassium sulfate or aluminum sulfate,
(3) 1 - 50 w%, preferably 1 - 10 w%, an alkali metal hydroxide, and
(4) optionally 1 - 80 w% of a source of alkali metal bicarbonates, alkaline earth metal hydroxides or alkaline earth metal oxides, preferably of calcium hydroxide or calcium oxide.

13. The admixture according to claim 12, **characterized in that** the alkali metal hydroxide is sodium hydroxide and the source of alkali metal bicarbonates is selected from sodium bicarbonate, the source of alkaline earth metal hydroxides is selected from hydrated lime, the source of alkaline earth metal oxides is selected from natural hydraulic lime, formulated lime, hydraulic lime, and air lime.

14. The admixture according to at least one of claims 12 or 13, **characterized in that** a weight ratio of alkali metal carbonate to alkali metal hydroxide is between 20:1 to 10:1.

15. The admixture according to at least one of claims 12 to 14, **characterized in that** a weight ratio of metal sulfate to alkali metal hydroxide is between 10:1 to 1:1.
